Europäisches Patentamt

European Patent Office

Office européen des brevets

(19)

(11) Numéro de publication: **0 026 691**
**B1**

(12) **FASCICULE DE BREVET EUROPEEN**

(45) Date de publication du fascicule du brevet:
**09.02.83**

(51) Int. Cl.³: **A 01 N 1/02,** F 17 C 3/08,
F 25 D 3/10

(21) Numéro de dépôt: **80401292.0**

(22) Date de dépôt: **10.09.80**

(54) Dispositif de stockage de produits tels que semences ou analogues comprenant un réservoir cryobiologique.

(30) Priorité: **28.09.79 FR 7924212**

(43) Date de publication de la demande:
**08.04.81 Bulletin 81/14**

(45) Mention de la délivrance du brevet:
**09.02.83 Bulletin 83/6**

(84) Etats contractants désignés:
**AT BE CH DE FR GB IT LI LU NL SE**

(56) Documents cités:
**US-A-3 187 937**
**US-A-3 707 079**
**CYROGENICS, vol. 12, jiun 1972, no. 3, Guildford, Surrey GB D. H. TANTAM: »Development of dewars for the storage of biological specimens«, pages 165—169**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Pelloux-Gervais, Pierre, 212, Cours de la Libération, F-38000 Grenoble (FR)**

(74) Mandataire: **Leclercq, Maurice et al, L'AIR LIQUIDE SOCIETE ANONYME POUR L'ETUDE ET L'EXPLOITATION DES PROCEDES GEORGES CLAUDE 75, Quai d'Orsay, F-75321 Paris Cedex 7 (FR)**

Dispositif de stockage de produits tels que semences ou analogues comprenant
un réservoir cryobiologique.

La présente invention concerne un dispositif de stockage de produits tels que semences ou analogues, du genre comprenant un réservoir cryobiologique, dont le récipient intérieur est isolé par une enveloppe raccordée au récipient intérieur par un col, dont l'extrémité supérieure forme collerette, une pluralité de boîtiers-supports comportant chacun un boîtier destiné à recevoir des éléments récepteurs de produits, tels que semences et associés chacun à des moyens de mise en place dans le dit réservoir incorporant une tige à isolation thermique s'engageant entre le dit col et un bouchon de fermeture et se terminant par une tête de retenue s'appuyant sur la dite collerette de col. Généralement, les moyens de fixation des boîtiers-supports comprennent une double fixation en position haute sur la collerette du col en position basse. A cet effet, on prévoit d'une part la mise en place d'un répartiteur de fond de réservoir constitué d'une plaque agencée perpendiculairement à l'axe du sol et présentant des échancrures arrondies, dans lesquelles viennent se loger circonférentiellement les boîtiers-supports recevant les éléments tubulaires récepteurs de semences, d'autre part, la mise en place d'un répartiteur haut sur la collerette de col, qui comporte des échancrures radiales dans les mêmes positions angulaires que les échancrures arrondies de la plaque inférieure et dans chacune desquelles vient se verrouiller une extrémité recourbée de la tige de fixation. Cette disposition permet le maintien des boîtiers-supports dans le réservoir au cours des transports de celui-ci, mais on conçoit que ce résultat n'est atteint que par la mise en place des moyens particuliers de fixation sur le réservoir et également bien entendu d'un bouchon avec un corps pourvu de rainures longitudinales dans lesquelles se logent les extrémités des tiges-supports. En outre, la manoeuvre de ces boîtiers-supports de semences n'est pas très aisée, car elle nécessite une mise en place de ceux-ci à la fois en position basse et en position haute, et notamment la mise en place en position basse s'avère délicate. Dans le brevet américain 3 187 937, on a proposé un agencement relativement compliqué de fixation amovible de la tige au boîtier-support qui permet, grâce à un décalage axial de la tige et à un montage amovible de celle-ci, de placer le boîtier-support sur le fond du récipient en une position excentrée permettant la formation d'une rangée annulaire de tels boîtiers-supports en contact avec le fond du réservoir. Cet agencement est d'un maniement peu satisfaisant et nécessite de la part de l'opérateur un soin excessif. Dans le brevet américain 3 707 079, on a proposé de suspendre au col d'un récipient un boîtier-support au moyen d'une tige en partie isolante, qui présente un crochet d'appui sur le bord supérieur du col, mais la disposition décrite ne s'applique qu'à un boîtier-support unique et si l'on devait loger dans le récipient plusieurs boîtiers-supports en une rangée annulaire, on rencontrerait des difficultés pour les agencer en des positions correctes, c'est-à-dire équidistantes, de sorte que non seulement la manipulation en serait peu aisée, mais en outre l'étanchéité au niveau du bouchon de réservoir serait impossible à assurer.

L'invention vise un dispositif de stockage de produits tels que des semences, du type mentionné, qui est de réalisation particulièrement simple, légère, robuste et de manipulation aisée.

Ces résultats sont obtenus selon l'invention en ce que la tige est fixée de façon inamovible au boîtier et en ce que la tête a une extension circonférentielle le long de la dite collerette telle que l'ensemble des dites extensions circonférentielles de têtes de retenue d'un jeu de boîtiers-supports associés à un réservoir corresponde à la plage d'appui prévue sur la dite collerette. Grâce à cet agencement, on évite toute une mise en place de pièces dans ou sur le réservoir cryobiologique de sorte que la réalisation des réservoirs s'en trouve facilitée, notamment parce que le réservoir interne peut alors être fait par simple emboutissage et repoussage d'une seule découpe de tôle.

Il est avantageux de réaliser le boîtier-support, tige comprise, d'un seul tenant en une matière plastique résistant aux basses températures et, à titre d'exemple, on cite certains polycarbonnates connus sous les désignations commerciales de »makrolon«, ou »lexan«, ou certains polyamides tel que celui connu sous la désignation commerciale »polyamide 11«, bien que cette énumération ne soit, bien entendu, pas limitative. De préférence, les têtes de retenue ont des extensions circonférentielles identiques et substantiellement égales à l'extension circonférentielle de la collerette divisée par le nombre de têtes. De la sorte, tous les boîtiers-supports sont interchangeables. De façon avantageuse, la tige de suspension comprend une partie en forme de lame courbe dans le sens transversal adaptée à être enserrée entre la paroi interne du col et un corps cylindrique de bouchon.

Grâce à cette disposition, l'ensemble de ces tiges constitue, à l'endroit du col, une nappe cylindrique uniforme telle que le bouchon de réservoir peut être alors réalisé avec un corps de bouchon sous forme d'un simple cylindre, sans aucune rainure.

Les caractéristiques et aventages de l'invention ressortiront dans la description qui va suivre, à titre d'exemple en référence aux dessins annexés dans lesquels:

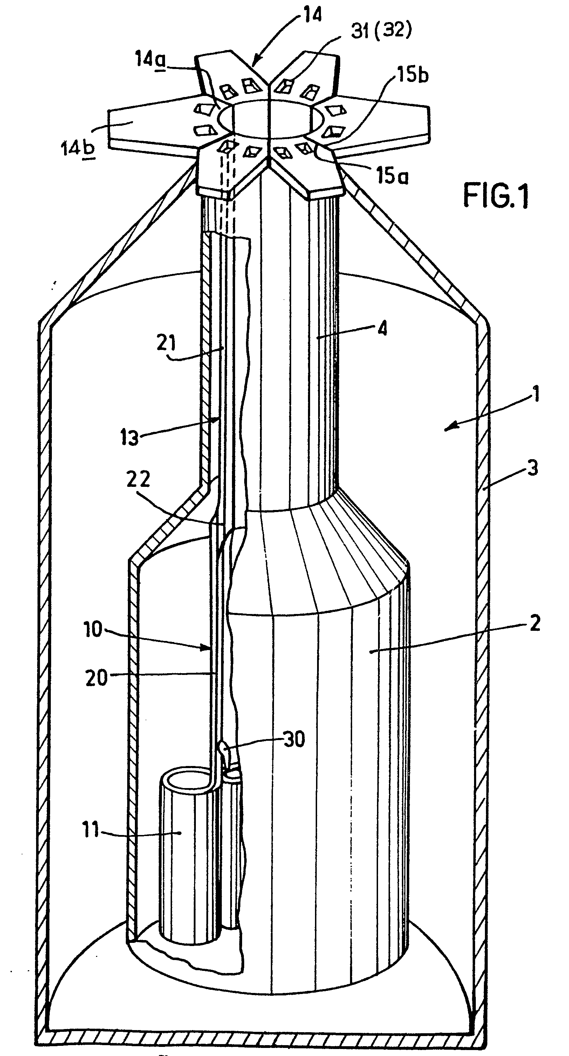

— la figure 1 est une vue en perspective en partie en coupe d'un dispositif de stockage selon l'invention;

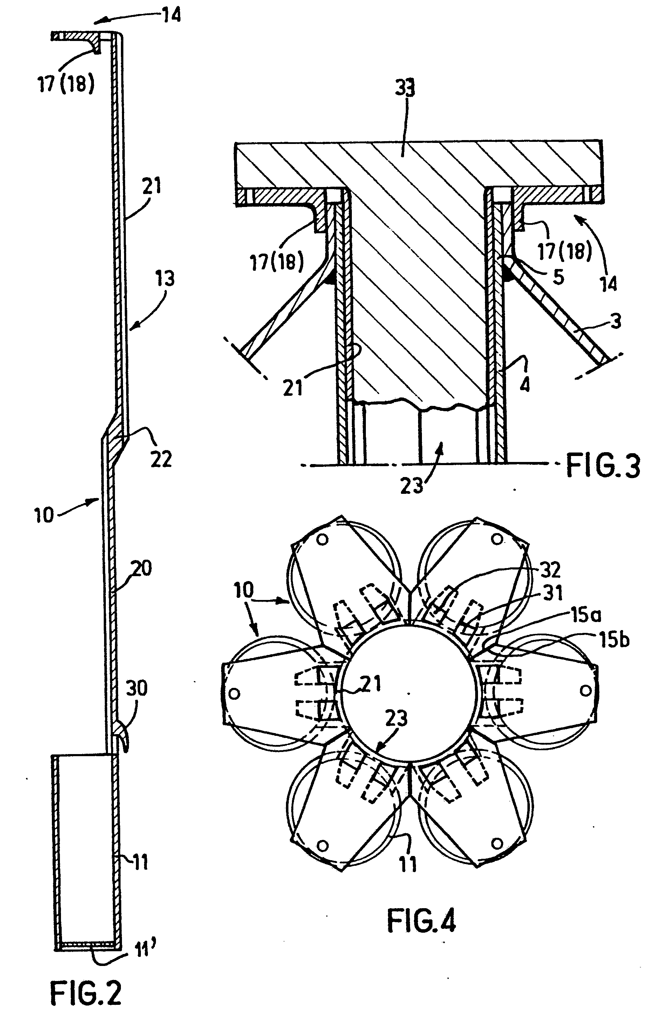

— la figure 2 est une vue en élévation d'un boîtier-support selon l'invention;

— la figure 3 est une vue à échelle agrandie en coupe verticale au niveau du bouchon;

— la figure 4 est une vue de dessus à échelle agrandie avant pose du bouchon.

En se référant aux dessins annexés, un dispositif de stockage de semences comprend un réservoir (1) destiné à recevoir un liquide cryogénique tel de l'azote liquide et est constitué à cet effet d'un récipient intérieur (2) isolé à distance par une enveloppe (3) reliée au récipient (2) par un col (4) se terminant à l'extérieur par une collerette (5), l'espace interstitiel entre le récipient intérieurs (2) et l'enveloppe (3) étant isolé par le vide, associé, le cas échéant, à des produits isolants de remplissage sous forme granulée ou à des couches de matériau alternativement réflecteeurs et isolants. Chaque boîtier-support de semences (10) comporte un boîtier (11), les semences étant placées par exemple dans des éléments tubulaires scellés et ce boîtier (11) à fond perforé (11') se prolonge par une tige (13) en forme de lame se terminant par une tête de retenue (14). La tête de retenue (14) présente une extension radiale dont la première partie (14a) situ/ée près de la tige présente des côtés (15a) et (15b) qui forment entre eux un agencement divergent tel que ces côtés (15a) et (15b) suivent des directions radiales par rapport à la collerette (5). Cette tête (14) comporte également deux doigts de verouillage (17) et (18) destinés à prendre appui contre la face externe de la collerette (5), maintenant ainsi en position correcte dans le sens vertical chaque boîtier-support (10). Les extensions circonférentielles de la partie (14a) entre les bords (15a) et (15b) sont telles que l'ensemble de ces parties (14a) mises côte à côte s'étende sur la totalité de l'extension circonférentielle de la collerette (5). Chaque tête (14) présente une partie (14b) éloignée de la tige (13), en forme de languette, permettant une préhension facile de la tête une fois qu'un bouchon (33) a été retiré.

On notera que la tige elle-même présente deux parties distinctes, une partie inférieure (20) raccordée à une partie supérieure (21) par un léger coude (22) tel que le boîtier (11) se trouve légèrement déporté vers l'extérieur dans la position d'attente dans le réservoir, ceci en vue de ménager un dégagement axial suffisant, pratiquement égal à celui du col (4) pour le retrait d'un quelconque boîtier-support (10). La partie de tige (21) s'étend sur une distance longitudinale correspondant au moins à celle du corps du bouchon de fermeture (33) et elle se présente sous forme d'une lame courbe dans le sens transversal à courbure cylindrique qui correspond à celle du col avec une extension circonférentielle qui est la même que celle de la partie (14a) de la tête (14) au niveau du col, en sorte que, lorsque tous les boîtiers-supports sont mis en place, l'ensemble des parties de tige (21) forme une nappe cylindrique (23) dans laquelle vient s'engager le bouchon (33) isolant cylindrique. Avantageusement, un doigt d'accrochage (30) est ménagé en saillie sur la tige (20) du côté opposé à un boîtier (11) et légèrement au-dessus de celui-ci et ce doigt (30) est adapté à s'engager dans l'une ou l'autre des deux perforations ménagées à cet effet (31) et (32) dans la tête retenue (14) d'un autre boîtier-support. De la sorte, pour retirer un ou plusieurs éléments récepteurs de semences, on saisit la languette (14b) d'un boîtier-support (10) pour amener le boîtier correspondant (11) dans le dégagement axial à l'intérieur de la rangée annulaire des boîtiers restants et on relève verticalement vers le haut le boîtier-support jusqu'à l'amener au niveau du col (4), dans la position où le doigt (30) s'engage dans l'une des perforations (31) au (32) d'un autre boîtier-support.

Dans cette position d'utilisation, où le boîtier (11) reste dans le col (4), non seulement le boîtier continue à être réfrigéré par les vapeurs d'azote, mais il constitue également bouchon évitant de trop grandes pertes thermiques.

L'invention a pour but essentiellement le stockage de semences, et autres produits biologiques et végétaux.

**Revendications**

1. Dispositif de stockage de produits tels que semences ou analogues, du genre comprenant un réservoir cryobiologique (1), avec un récipient intérieur (2) isolé par une enveloppe (3) raccordée au réservoir intérieur (2) par un col (4) dont l'extrémité supérieure forme collerette (5), une pluralité de boîtiers-supports (10) comportant chacun un boîtier (11) destiné à recevoir des éléments récepteurs de produits tels que semences et associés chacun à des moyens de mise en place dans ledit réservoir incorporant une tige (13) à isolation thermique s'engageant entre ledit col et un bouchon de fermeture (33), et se terminant par une tête de retenue (14) s'appuyant sur la collerette (5) dudit col, caractérisé en ce que ladite tige (13) est fixée de façon inamovible au boîtier (11), et ladite tête (14) a une extension circonférentielle le long de ladite collerette (5), telle que l'ensemble des dites extensions circonférentielles des têtes de retenue (14) d'un jeu de boîtiers associés (11) à un réservoir (1) corresponde à la plage d'appui prévue sur ladite collerette (5).

2. Dispositif de stockage de produits selon la revendication 1, caractérisé en ce que la plage d'appui s'étend sur toute la circonférence de la collerette (5).

3. Dispositif de stockage de produits selon la revendication 2, caractérisé en ce que toutes les têtes de retenue (14) ont des extensions circonférentielles identiques et chacune égale à l'extension circonférentielle de la collerette (5) divisée par le nombre de têtes (14).

4. Dispositif de stockage de produits selon la revendication 1, caractérisé en ce que la tige de suspension (13) comprend une partie supérieure (21) en forme de lame courbe dans le sens transversal adaptée à être enserrée entre la paroi interne du col (4) et un corps cylindrique de bouchon (33).

5. Dispositif de stockage de produits selon l'une quelconque des revendications 1 à 4, caractérisé en ce qu'un tête de retenue (14) comporte des ergots d'appui (17—18) contre la paroi externe de la collerette de col (5).

6. Dispositif de stockage de produits selon l'une quelconque des revendications 1 à 5, caractérisé en ce que la tige de suspension (13) comporte, vers le bas et sur sa face opposée à un boîtier, un doigt (30), tandis que le tête de retenue (14) présente une perforation (31—32) près de la tige (13) au travers de laquelle peut s'engager un doigt (30).

7. Dispositif de stockage de produits selon l'une quelconque des revendications 1 à 6, caractérisé en ce que la tige et le boîtier sont réalisés d'un seul tenant en une matière plastique résistant aux basses températures.

## Patentansprüche

1. Vorrichtung zum Lagern von Produkten, wie Sämereien oder dergleichen, mit einem cryobiologischen Behälter (1) mit einem inneren Behälter (2), der durch eine Umhüllung (3) isoliert ist, die an den Innenbehälter (2) durch einen Hals (4) angeschlossen ist, dessen oberes Ende einen Kragen (5) bildet, mit einer Vielzahl von Becherträgern (10) mit Becher (11) zur Aufnahme von Aufnahmeelementen für Produkte, wie Sämereien, wobei jeder Becherträger Einbaumitteln in dem Behälter zugeordnet ist und eine Stange (13) mit Wärmeisolation aufweist, die zwischen dem Hals und einem Verschlußstopfen (33) in Eingriff steht und der in einem Haltekopf (14) endet, der sich auf dem Kragen (5) des Halses abstützt, dadurch gekennzeichnet, daß die Stange (13) unbeweglich am Becher (11) befestigt ist und daß der Kopf (14) längs des Kragens (5) eine Kreisumfangsausdehnung hat sowie die Gesamtheit der Kreisumfangsausdehnungen der Halteköpfe (14) einer einem Behälter (1) zugeordneten Bechergruppe (11) dem auf dem Kragen (5) vorgesehenen Stützbereich entspricht.

2. Vorrichtung zum Lagern von Produkten, wie Sämereien und dergleichen, nach Anspruch 1, dadurch gekennzeichnet, daß sich der Stützbereich über den gesamten Umfang des Kragens (5) erstreckt.

3. Vorrichtung zum Lagern von Sämereien nach Anspruch 2, dadurch gekennzeichnet, daß alle Halteköpfe (14) identische Umfangsausdehnungen haben und jeder gleich der Umfangsausdehnung des Kragens (5), dividiert durch die Anzahl der Köpfe (14) ist.

4. Vorrichtung zum Lagern von Produkten, wie Sämereien und dergleichen, nach Anspruch 1, dadurch gekennzeichnet, daß die Aufhängestange (13) einen oberen Teil (21) in Form eines quer gekrümmten Streifens aufweist, die geeignet derart ausgestaltet ist, daß sie zwischen der Innenwand des Halses (4) und einem zylindrischen Körper des Stopfens (33) eingeschlossen ist.

5. Vorrichtung zur Lagerung von Produkten, wie Sämereien und dergleichen nach einem der Ansprüche 1 bis 4, dadurch gekennzeichnet, daß ein Haltekopf (14) Stützvorsprünge (17—18) gegen die Außenwand des Kragens des Halses (5) aufweist.

6. Vorrichtung zur Lagerung von Produkten, wie Sämereien und dergleichen, nach einem der Ansprüche 1 bis 5, dadurch gekennzeichnet, daß die Aufhängestange (13) nach unten und zu der einem Becher gegenüberliegenden Seite einen Finger (30) aufweist, während der Haltekopf (14) in der Nähe der Stange (13) eine Lochung (31—32) aufweist, durch welche ein Finger (30) eingreifen kann.

7. Vorrichtung zur Lagerung von Produkten, wie Sämereien und dergleichen, nach einem der Ansprüche 1 bis 6, dadurch gekennzeichnet, daß die Stange und der Becher in einem Stück aus Kunststoff hergestellt sind, welcher tiefen Temperaturen widersteht.

## Claims

1. Apparatus to store products such as seeds or the like, of the type comprising a cryobiological reservoir (1) with an inner reservoir (2) insulated by an envelope (3) connected to the inner reservoir (2) by a collar (4) the upper end thereof forming a collet (5), a plurality of cup-supports (10) with cup (11) defined to receive receiving elements of products such as seeds, each support being associated to means for mounting them within said reservoir incorporating a rod (13) with thermal insulation engaged between said collar and a closing plug (33) and terminating by a retaining head (14) supported on the collet (5) of said collar, characterized by that said rod (13) is fixed immovably with the cup (11) and that said head (14) has an circumferential extension along said collet (5), as the totality of said circumferential extensions of the retaining head (14) of a set of cups (11) associated to a reservoir (1) corresponds to the supporting area provided on said collet (5).

2. Apparatus to store products such as seeds or the like according to claims 1, characterized by that the supporting area extends the entire periphery of the collet (5).

3. Apparatus to store seeds according to claims 2, characterized by that all the retaining heads (14) have identical circumferential extensions and each equal to the circumferential extension of the collet (5) divided by the number of heads (14).

4. Apparatus to store products such as seeds or the like according to claim 1, characterized by that the suspension rod (13) comprises an upper part (21) in form of a corved strip transversely, adapted to be enclosed between the inner wall of the collar (4) and a cylindrical body of the plug (33).

5. Apparatus to store products such as seeds or the like according to one of the claims 1 to 4, characterized by that one retaining head (14) comprises supporting noses (17—18) opposed to the outer wall of the collects of the collar (5).

6. Apparatus to store products such aus seeds or the like according to one of the claims 1 to 5, characterized by that the suspension rod (13) comprises downward and on its face opposed to a cup a finger (30) while the retaining head (14) comprises a perforation (31—32) adjacent to the rod (13), through which perforation a finger (30) can engage.

7. Apparatus to store products such as seeds or the like according to one of the claims 1 to 6, characterized by that the rod and the cup are realized integrally of plastics resistant deep temperatures.

FIG.1

**FIG.2**

**FIG.3**

**FIG.4**